# EUROPEAN PATENT APPLICATION

(11) **EP 1 000 553 A1**
(43) Date of publication of application: **17.05.2000**
(21) Application number: 99308995.2
(22) Date of filing: 11.11.1999
(51) Int. Cl.: A23L 1/18, A23L 1/168, A23P 1/12

(54) **Ready-to-eat extruded cereal with toasted grain flavor**

(30) Priority: 12.11.1998 US 191062
(71) Applicant: KRAFT FOODS, INC., Northfield, Illinois 60093-2758 (US)
(72) Inventor: Usiak, Amy Marie, Charlotte, Michigan 48813 (US); Peter, Kristin Marie, New York, New York 10024 (US); Stanyon-Burns, Pamela Jean, Salt Lake City, Utah 84117 (US); Feneley, Michael, Marshall, Michigan 49068 (US)
(74) Representative: Eyles, Christopher Thomas

(57) **Abstract**

A ready-to-eat cereal with improved toasted grain flavor is prepared by extruding a high-wheat content composition with a tri alkali metal phosphate, e.g., trisodium phosphate, and, preferably, a precooked cereal composition having a well-developed brown flavor profile. In preferred forms, extrusion times will be short, e.g., less than 1 minute, and the formulation will contain malted barley flour, sugar and 10 to 20% flour or fines from a fully-cooked, fully-browned, grain-based cereal and at least 60% wheat flour, percents being by weight of the dry ingredients.

## Description

### Technical Field

The invention relates to enabling the production of a high-wheat-content formula ready-to-cat cereal by extrusion at high rates by eliminating the normally raw flavor and developing the toasted grain flavor and color more typical of conventional breakfast cereals which have been cooked for longer time periods.

Cereals have been prepared from a number of formulations, typically rich in one or more cereal grains. They can be packaged for final preparation by cooking or ready-to-eat. In most cases, a toasted grain flavor is desired and raw or uncooked grain flavors and aromas are undesirable. The degree of cooking to achieve the conversion from uncooked to cooked flavors, as well as the exact character of the flavors, varies with the type of grain, the type of cooking and other factors including composition, cook time and cook temperature. Cooking by extrusion has been used for years for many cereal-based products, but its application to puffed, high-wheat formulations has not been achievable at practical throughputs while developing toasted flavor notes.

The art is in need of an effective solution to this problem.

### Background Art

Breakfast cereal can play an important role in the diet because it contributes a variety of important nutrients at relatively low cost. Cereal and milk, when served together, complement one another in several important nutrients. Cereal is high in thiamine, niacin, and iron, while milk is low in these nutrients. Milk is high in calcium and riboflavin (vitamin B2) and supplements the low levels of these two nutrients in cereal. The cereal-milk combination is low in fat and cholesterol but high in complete protein, essential B vitamins, and minerals.

Ready-to-eat cereals for eating with cold milk for breakfast are prepared in various physical forms. Flaked and puffed products have achieved popular appeal while shredded and other forms are also available. In all of the prior art processes, considerable cooking times are employed to assure not only a suitable physical form, but well-developed flavor, color and aroma.

For example, puffed cereal products can be made by extruding a dough and puffing it as it exits the extruder as in U. S. Patent No. 3,117,006, to J. Wenger, which describes an extrusion device suitable for the task including a preconditioning section preceding an extruder-expander. They can also be prepared by first forming a dough into a pellet shape and then expanding. See, for example, S. H. Reesman, U. S. Patent No. 3,506,454, which describes extruding a fully-cooked dough from a macaroni extruder, cutting and drying the extrudate, and then puffing in a fluidized bed. This type of puffing process, in general, is also used to make puffed wheat and the like from whole grains.

The process of forming ready-to-eat puffed cereals from an extruder would seem to have advantages in terms of simplicity and throughput, but it has been difficult to achieve high product quality in expanded wheat cereals prepared by this process. Unlike many other cereal forming processes, extrusion expansion does not involve a toasting process following forming - as, for example, done for flaked cereals. See U.S. Patent 5,510,130 to Holtz et al., for example, which utilizes a twin-screw extruder to prepare cereal pellets that are flaked and toasted. The toasting process provides a rich flavor profile which to date has been missing from extruder-expanded wheat cereals.

Twin-screw extruders operated at desirable throughputs have short residence times - not sufficient to replace conventional dough-treatment processes that provide full cooking. See, for example U. S. Patent No. 4,949,628, which utilizes a twin-screw extruder to prepare cookies, but requires a microwave heater at the end of a first stage and a second-stage mixer, just to prepare a cookie dough for wire cutting and baking.

There remains a need for formulations and processes that will enable the operation of extruders at desirable throughputs, and short residence times, to produce an expanded high-wheat, ready-to-eat cereal product having a well-developed, cooked flavor, aroma and color.

### Disclosure of the Invention

It is an object of the invention to provide a process to easily produce an expanded ready-to-eat cereal product having improved flavor, aroma and color.

It is an object of the invention to provide a composition enabling the production of an extruder-expanded ready-to-eat cereal product having improved flavor, aroma and color.

It is another object of the invention to provide an extrusion process for preparing an expanded ready-to-eat cereal with improved toasted grain flavor.

It is another object of the invention to provide a composition that will enable a high throughput extrusion process to prepare a ready-to-eat cereal with improved toasted grain flavor and color.

These and other objects are achieved by the present invention, which provides: a ready-to-eat cereal with improved toasted grain flavor, and a process and a composition for preparing it.

In one aspect, the invention provides a process for preparing an extruder expanded, ready-to-eat cereal with improved toasted grain flavor, comprising: feeding a formulation comprising wheat flour and a tri alkali metal phosphate into a high-shear extruder with sufficient water to hydrate the formulation; heating and working the formulation under pressure within the extruder to sufficiently hydrate the formulation and gelatinize starch in the flour; extruding the formulation through a shaping die at an exit end of the extruder and cutting immediately upon exit from the die, thereby forming discrete, expanded cereal pieces. The product of this process is much improved.

In another aspect, the invention provides a composition for preparation of a ready-to-eat cereal with improved toasted grain flavor by extruder expansion under conditions of heat and pressure sufficient to hydrate the formulation and gelatinize starch in the flour, but insufficient, in the absence of tri alkali metal phosphate, to provide development of a fully-cooked flavor, the composition comprising wheat flour and a tri alkali metal phosphate.

Many of the preferred aspects of the invention are described below.

### Industrial Applicability

The following description will illustrate the preparation of preferred products of the invention to provide the person skilled in the art with the information necessary to make these products as well as variations of them using equivalent materials and methods. All parts and percentages given in this description are by weight and are based on the weight of the formulation at the indicated state of processing.

Cereals are prepared by the process of the invention by utilizing a high-shear extruder to mix and cook a formulation comprising a cereal flour, water and optional ingredients, such as sweeteners and fats or oils in minor amounts. The cooking will be effective to properly condition and produce expansion of the product as it exits the extruder. But, unlike the prior art extrusion methods which cook and/or precondition for extended times effective to bring out the natural cooked flavor, aroma and color of the grains employed, the degree of cooking utilized by the invention cannot alone achieve these desirable results. Without the improvements of the invention, the cooking conditions are simply not sufficient to develop color, flavor and aroma. To achieve the short extrusion cooking times desired and still achieve the desired results, an additive comprising a tri alkali metal phosphate is added to the formulation. Preferred among these are trisodium phosphate and tripotassium phosphate, especially trisodium phosphate (TSP). The phosphate or mixture is employed at a level sufficient to achieve an improvement in color, flavor and/or aroma, e.g., at least 0.2% of all cereal grain flours, and preferably from about 0.3 to about 0.6%. Amounts of over about 1% will not offer added benefit in most cases. Also, preferably, the additive can comprise fines or flour prepared from a precooked, fully-browned, grain-based cereal (hereinafter referred to as "cereal fines").

The cereal product of the invention is a high-wheat formulation, e.g., containing at least 60% and, preferably, at least 70% wheat flour. The flour can be of any commercial form, including whole wheat flour, soft wheat flour, medium flour, strong flour, wheatmeal flour, soft white flour, soft red flour, or blends of any of these with each other or flours of other grains. A preferred additional flour is from malted barley. And corn, oat, rice, potato, arrowroot, soy, sweet potato, buckwheat, tapioca, rye flours can be used in minor proportions. Malted barley flour is a preferred ingredient and will most preferably be employed at a level of from about 5 to about 15%.

As noted above, flour or fines from a fully-cooked, fully-browned, grain-based cereal can be employed. Some flavorful cereal products that can be employed to prepare this "cereal fines" ingredient are sold under the trademarks Grape Nuts®, Grape Nut Flakes®, All Bran®, and Wheaties®. All of these branded cereal products have a nicely-developed brown, toasted flavor due to their processing which has included utilizing a sugar in the formulation and toasting or baking it to achieve the desired flavor. A high-wheat based, fully-cooked, fully-browned product is preferred because it is compatible to the expanded high-wheat final cereal product. At least 5% of this ingredient is preferred and most desirably 10 to 20% of Grape Nuts® brand cereal fines.

The sweeteners of choice are sugars. The term "sugar" is to be understood as meaning any of a number of useful saccharide materials. Included in the list of useful sugars are the mono-saccharides, di-saccharides and polysaccharides and their degradation products; e.g., pentoses, including aldopentoses, methylpentoses, keptopentoses, like xylose and arabinose; a deoxyaldose like rhamnose, hexoses and reducing saccharides such as aldo hexoses like glucose, galactose and mannose; the ketohexoses, like fructose and sorbose; disaccharides, like lactose and maltose; non-reducing disaccharides such as a sucrose and other polysaccharides such as dextrin and raffinose; and hydrolyzed starches which contain as their constituents oligosaccharides. In addition to granular sugar forms such as sucrose, maple sugar and brown sugar, a number of sugar syrups, including corn syrup, high fructose corn syrup, honey, molasses, invert sugar syrup, maple syrup, fruit syrup and the like, are common sources as are other various granular and powdered forms.

The weight of sugar will typically comprise at least 0.5%, and preferably from 1 to 10 %, of the syrup. In the case where the sweetener is corn syrup, it will be used as a source of both sugar and water. High intensity sweeteners will be use in like proportion, based on their relative sweetnesses, and the above ratios will be adjusted accordingly.

Among the intense sweeteners are aspartame, acesulfame-K, saccharin, cyclamate, neohesperidin, dihydrochalcone, thaumatin, sucralose, altame, stevioside, glycyrrhizin, Lo Han Guo, and the like. Also, low-intensity, low-calorie sweeteners such as sorbitol and erythritol can be employed.

The cereal formulation can additionally contain common ingredients for cereals, such as antimycotics, nutrients, emulsifiers, dispersants, colorants, flavor enhancing materials, yeast, sodium chloride and other salts, and the like as necessary to achieve the overall flavor and texture desired.

A high-pressure, high-shear extruder, such as those of the twin-screw type, capable of developing high shear while heating and working sufficiently to produce product expansion upon exiting a die at the end of the extruder is employed to mix, cook and expand the cereal formulation. Representative of this type of extruder, is a Werner & Pfleiderer model ZSK-57. Information is available about this extruder directly from the manufacturer or from any number of patents that refer to its use in baking and the like. See, for example, U. S. Patent No. 4,949,628 in this regard. This reference is incorporated herein by reference in its entirety to avoid the unnecessary detail of describing its construction and operation.

Briefly, suitable extruders will have at least one screw positioned within a barrel, which is heated in various segments along its length. The barrel will also have a feed end wherein dry ingredients and aqueous ingredients can be added separately or as a premixed dough. The amount of water used should be the amount known to hydrate the ingredients and gelatinize the starch components of the ingredients upon the addition of heat. The amount of added water will, therefore, vary with the moisture content of the ingredients. Typical moisture contents for the cereal formulation within the extruder fall with in the range of from about 6 to about 16%.

The degree of heat applied to the cereal formulation being cooked within the barrel will be sufficient to achieve the noted hydration and gelatinization, and further should be sufficient to cause water to flash from the product as it exits the extruder (product at this point contains approximately 6- 10% water). Thereafter the extruded product is dried, i.e. in a Proctor & Schwartz drier. Typical moisture contents for the dried product falls within the range of from about 2 to about 5%.

The residence time within the extruder will be sufficient to properly condition and produce expansion of the product as it exits the extruder. Typically, this will be less than 2 minutes and in the preferred form of the process will be under 1 minute and even as short as 20 to 40 seconds. Because the residence time is so short, unlike the prior art methods which cook and/or precondition for extended times to bring out a natural cooked flavor, aroma and color, the degree of cooking utilized by the invention cannot alone achieve these desirable results. For most of the length of the barrel, the temperature will be maintained at above about 225°F (about 107.22°C), but below a temperature that would cause scorching or burning, e.g., up to about 300°F (about 148.89°C).

The screw will be segmented with flights of various shapes to feed and mix the cereal formulation under conditions of high pressure and high shear appropriate for the stage in processing. The extruder will have a die at the end opposite the feed end through which the cooked cereal formulation will be forced with the release of pressure, resulting in expansion, e.g., of from about 20 to 200%, typically from about 70 to about 90 %. The face of the die from which the cooked cereal formulation exits has an associated knife which is typically rotated at a rate timed to the linear rate of extrusion to cut the product into lengths of desired size. A review of currently-available products will give a good estimate as to suitable sizes for cereal pieces. The expanded cereal pieces can be formed into just about any cross-sectional size and will have a bulk density after they have been dried of from about 60 to about 95 grams per liter.

The product as prepared above can be coated with sugar syrup, and other ingredients as known in the art to provide any of those in three general groups: whole grain, enriched, or restored. A whole grain cereal retains the nutrients of the whole, unprocessed grain and contains bran, germ, and endosperm in the proportions found in nature. An enriched cereal is one that has been supplemented by vitamins or minerals, or sometimes both, beyond the whole grain levels or by other nutrients, such as vitamin D, that were not significantly present in the original grain. A restored cereal is made from the entire grain or from portions of one or more grains. It is augmented by thiamin (vitamin B1), nicotinic acid (vitamin B5), and iron to attain the levels of these substances present in the grain before processing. Sugar coatings comprising from about 20 to about 60 % of the final product provide a pleasing taste.

The following Example is provided to further illustrate and explain a preferred form of the invention and is not to be taken as limiting in any regard. Unless otherwise indicated, all parts and percentages are by weight.

### Example

A number of formulations were prepared as noted in the following table. They were all run through a Werner & Pfleiderer model ZSK-57 extruder. The dried ingredients excluding TSP were combined and the TSP was added utilizing a secondary feeder at the specified amounts.

| Ingredient | Run 1 | Run 2 | Run 3 | Run 4 | Run 5 |
|---|---|---|---|---|---|
| Wheat Flour | 74.8 | 74.8 | 74.8 | 74.8 | 74.8 |
| Malted Barley Flour | 7.0 | 7.0 | 7.0 | 7.0 | 7.0 |
| Baked Cereal Fines | 15.0 | 15.0 | 15.0 | 15.0 | 15.0 |
| Sucrose | 2.0 | 2.0 | 2.0 | 2.0 | 2.0 |
| Sodium Chloride | 1.2 | 1.2 | 1.2 | 1.2 | 1.2 |
| Trisodium Phosphate | 0 | 0.25 | 0.5 | 0.75 | 1.0 |

The extruder screw had a total length of 920 mm. A screw profile typical of that used for expanded products was utilized consisting of a feeder section, a mixing and compression zone.

The extruder was run under the following temperatures (°F) [°C].

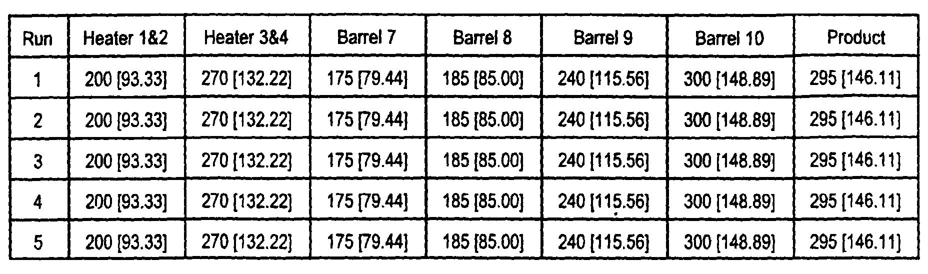

Additionally, the following parameters were recorded.

| Run | Screw Speed (RPM) | Pressure (PSI) [MPa] | Torque (%) |
|---|---|---|---|
| 1 | 250 | 1500 [10.34] | 40 |
| 2 | 270 | 1450 [10.00] | 40 |
| 3 | 270 | 1450 [10.00] | 40 |
| 4 | 270 | 1450 [10.00] | 40 |
| 5 | 270 | 1450 [10.00] | 40 |

The total residence time in the extruder was approximately 20-25 seconds.

After drying and cooling, the expanded cereal pieces were placed in a coating reel and 30 to 35% sugar was applied. The final sugar coated, expanded cereal had a density of 110 to 130 grams per liter.

The addition of the trisodium phosphate to the cereal base product results in positive flavor benefits. The flavor profile changes from raw grain towards toasted notes, while at the same time improving the texture. The color was also notably improved. The aroma prior to cooling was more fully cooked. An expert in-house taste panel evaluated the syrup coated final cereal products. The product at 0% trisodium phosphate had "raw" and "bitter" flavor notes. At 0.25%, "light toasting" notes were developed. The 0.50% level produced some "strong toasted, rounded" flavor notes. At 0.75%, some "burnt" flavor notes were observed and these increased at the higher level. Levels beyond 1.0% would appear to be undesirable. In the example, the 0.5% TSP addition produced the flavor preferred by the panel.

The above description is intended to enable the person skilled in the art to practice the invention. It is not intended to detail all of the possible modifications and variations that will become apparent to the skilled worker upon reading the description. It is intended, however, that all such modifications and variations be included within the scope of the invention which is defined by the following claims. The claims are meant to cover the indicated elements and steps in any arrangement or sequence which is effective to meet the objectives intended for the invention, unless the context specifically indicates the contrary.

## Claims

1. A process for preparing an extruder expanded, ready-to-eat cereal with improved toasted grain flavor, comprising:
feeding a formulation comprising wheat flour and a tri alkali metal phosphate into a high-shear extruder with sufficient water to hydrate the formulation;
heating and working the formulation under pressure within the extruder sufficient to hydrate the formulation and gelatinize starch in the flour;
extruding the formulation through a shaping die at an exit end of the extruder and cuffing immediately upon exit from the die, thereby forming discrete, expanded cereal pieces.

2. A process according to claim 1, wherein the residence time within the extruder is insufficient, in the absence of the tri alkali metal phosphate, to provide development of a fully-cooked flavor.

3. A process according to claim 1 or claim 2, wherein the formulation further comprises a flour or fines from a fully-cooked, fully-browned, grain-based cereal.

4. A process according to any one of claims 1 to 3, wherein the formulation comprises at least 60% wheat flour.

5. A process according to any one of claims 1 to 4, wherein the formulation further comprises malted barley flour.

6. A process according to any one of claims 1 to 5, wherein the formulation further comprises 5-15% malted barley flour, sugar and 10 to 20% of flour or fines from a fully-cooked, fully-browned, grain-based cereal and comprises at least 70% wheat flour.

7. A process according to any one of claims 1 to 6, wherein the residence time within the extruder is less than 2 minutes and is insufficient, in the absence of the tri alkali metal phosphate, to provide development of a fully-cooked flavor.

8. A process according to any one of claims 1 to 7, wherein the residence time within the extruder is insufficient, in the absence of the tri alkali metal phosphate, to provide development of a fully-cooked flavor, and the formulation further comprises a flour or fines from a fully-cooked, fully-browned, grain-based cereal and comprises at least 60% wheat flour by weight of the dry ingredients.

9. A process according to any one of claims 1 to 8, wherein the residence time within the extruder is less than 1 minute and is insufficient, in the absence of the tri alkali metal phosphate, to provide development of a fully-cooked flavor, and the formulation further comprises 5-15% malted barley flour, sugar and 10 to 20% flour or fines from a fully-cooked, fully-browned, grain-based cereal and comprises at least 70% wheat flour, percents being by weight of the dry ingredients.

10. A process according to claim 1, wherein the formulation comprises at least 60% wheat flour, 5-15% malted barley flour, sugar, 10 to 20% flour or fines from a fully-cooked, fully-browned, grain-based cereal and at least 0.2% trisodium phosphate, percents being by weight of the dry ingredients; wherein the residence time within the extruder is less than 1 minute; and wherein the discrete, expanded cereal pieces have a bulk density of from 60 to 95 grains per liter after drying.

11. A process according to claim 10, wherein the trisodium phosphate is present at a level of from 0.3 to 1% by weight of the dry ingredients.

12. A process according to claim 10 or claim 11, wherein the trisodium phosphate is present at a level of from 0.3 to 0.6% by weight of the dry ingredients and the residence time within the extruder is from 20 to 40 seconds.

13. A composition for preparation ready-to-eat cereal with improved toasted grain flavor by extruder expansion under conditions of heat and pressure sufficient to hydrate the formulation and gelatinize starch in the flour, but insufficient, in the absence of tri alkali metal phosphate, to provide development of a fully-cooked flavor, the composition comprising wheat flour and a tri alkali metal phosphate.

14. A composition according to claim 13, wherein the tri alkali metal phosphate is trisodium phosphate.

15. A composition according to claim 13 or claim 14, wherein the tri alkali metal phosphate is employed at a level of from 0.2 to 1%, by weight of the dry ingredients.

16. A composition according to any one of claims 13 to 15, which further includes malted barley flour.

17. A composition according to any one of claims 13 to 16, which further comprises a flour or fines from a fully-cooked, fully-browned, grain-based cereal and comprises at least 60% wheat flour by weight of the dry ingredients.

18. A composition according to any one of claims 13 to 17, which further comprises sugar, 10 to 20% flour or fines from a fully-cooked, fully-browned, grain-based cereal, from 5 to 15% malted barley flour, and comprises at least 60% wheat flour by weight of the dry ingredients, percents being by weight of the dry ingredients.
